Europäisches Patentamt

European Patent Office

Office européen des brevets

(11) Veröffentlichungsnummer: **0 374 566**
**A2**

## EUROPÄISCHE PATENTANMELDUNG

(21) Anmeldenummer: **89122327.3**

(22) Anmeldetag: **04.12.89**

(51) Int. Cl.5. **B62J 7/02**

(30) Priorität: **21.12.88 DE 3842926**

(43) Veröffentlichungstag der Anmeldung:
**27.06.90 Patentblatt 90/26**

(84) Benannte Vertragsstaaten:
**AT BE CH DE ES FR GB GR IT LI LU NL SE**

(71) Anmelder: **HOBBYT AUSRÜSTUNG FÜR DRAUSSEN GMBH**
**Nieder Kirchweg 7**
**D-6230 Frankfurt am Main 80(DE)**

(72) Erfinder: **Hornstein, Peter c/o Keil & Schaafhausen**
**Patentanwälte Eysseneckstrasse 31**
**D-6000 Frankfurt am Main 1(DE)**

(74) Vertreter: **Keil, Rainer A., Dipl.-Phys. Dr. et al**
**KEIL & SCHAAFHAUSEN Patentanwälte**
**Eysseneckstrasse 31**
**D-6000 Frankfurt am Main 1(DE)**

(54) Gepäcktragevorrichtung für Zweiradfahrzeuge wie Fahrräder.

(57) Die Erfindung bezieht sich auf eine Gepäcktragevorrichtung für Zweiradfahrzeuge wie Fahrräder, die die Mitführung eines Gepäckstückes (5) bei niedrigem Schwerpunkt gestattet, leicht montierbar ist, geringes Gewicht hat, eine einfache Montage und Demontage ermöglicht, keine Klappergeräusche verursacht und den ästhetischen Eindruck des Zweiradfahrzeuges nicht beeinträchtigt. Zu diesem Zweck ist ein auf der Radachse (3) besfestigbares Halterungsteil (1) und ein mit dem Gepäckstück (5) verbindbares Tragteil (2) vorgesehen, wobei das Tragteil (2) mit dem Halterungsteil (1) lösbar verbindbar ist.

FIG.1

## Gepäcktragevorrichtung für Zweiradfahrzeuge wie Fahrräder

Die Erfindung betrifft eine Gepäcktragevorrichtung für Zweiradfahrzeuge wie Fahrräder.

Bekannte Gepäcktragevorrichtungen, wie herkömmliche Fahrradgepäckträger, die fest mit dem Zweiradfahrzeug verbunden sind, weisen erhebliche Nachteile auf, wie z.B. einen ungünstigen, zu hohen Schwerpunkt der Gepäckstücke, was die Fahreigenschaften negativ beeinflusst, eine umständliche Befestigungsart, die hohen Aufwand beim Be- und Abladen erfordert, eine ungenügende Fixierung der Gepäckstücke, ein relativ hohes Gewicht, unangenehme Klappergeräusche im unbeladenen Zustand, mißbräuchlich zur Personenbeförderung verwendbar sind und daher die Sicherheit beeinträchtigen, sowie eine nachteilige ästhetische Wirkung, die den Gesamteindruck des Zweiradfahrzeuges beeinträchtigt.

Aufgabe der vorliegenden Erfindung ist es, eine Gepäcktragevorrichtung zu entwickeln, welche die Mitführung eines Gepäckstückes bei niedrigem Schwerpunkt gestattet, einfaches und schnelles Montieren und Demontieren des Gepäckstückes ermöglicht, geringes Gewicht hat, keine Klappergeräusche verursacht sowie den ästhetischen Eindruck des Zweiradfahrzeugs nicht beeinträchtigt.

Diese Aufgabe wird erfindungsgemäß im wesentlichen gelöst durch ein auf der Radachse befestigbares Halterungsteil und ein mit dem Gepäckstück verbindbares oder verbundenes Tragteil, wobei das Tragteil mit dem Halterungsteil lösbar verbindbar ist, ist es nunmehr möglich, ein Gepäckstück mit dem Schwerpunkt in der Nähe der Radachse zu befördern.

Um ein Verdrehen des Gepäckstückes um die Radachse zu verhindern, wird das Halterungsteil vorzugsweise mit der Radmutter od. dgl. Klemmvorrichtung, z.B. Schnellspannvorrichtung, verdrehsicher auf der Radachse befestigt.

Diese Wirkung läßt sich besonders einfach dadurch erzielen, daß das Halterungsteil einen Vorsprung aufweist, der in einen Rahmenschlitz der Gabel des Zweiradfahrzeugs einführbar ist.

Um das Halterungsteil der Geometrie verschiedener Zweiradfahrzeuge anpassen zu können, sieht eine weitere vorteilhafte Ausgestaltung der Erfindung vor, daß das Halterungsteil mit einem auf der Radachse verdrehsicher montierbaren Arretierungsteil in vorgegebener Winkellage verbindbar ist.

Dieses Arretierungsteil weist vorzugsweise als Verdrehsicherung einen Ansatz, der in einen Rahmenschlitz der Gabel des Zweiradfahrzeugs einführbar ist, auf.

Um eine Anpassung auf jeden Fahrzeugtyp zu ermöglichen, sieht eine weitere Ausgestaltung der Erfindung vor, daß das Halterungsteil in unterschiedlichen Winkellagen formschlüssig in den Arretierungsteil eingreifend auf der Radachse montierbar ist.

Eine zweckmäßige Ausgestaltung der Erfindung sieht dabei vor, daß das Arretierungsteil ringförmig ausgebildet und auf die Radachse aufsteckbar ist.

Die Verdrehsicherung zwischen Arretierungsteil und Halterungsteil in vorwählbarer und veränderbarer Winkelstellung kann vorzugsweise durch zwei Zahnkranzfräsungen auf den einander zugewandten Seite der beiden Teile erreicht werden. Arretierungsteil und Halterungsteil können jedoch auch in vorbestimmter Winkellage miteinander unlösbar verbunden, z.B. miteinander verklebt sein.

Bei einer weiteren bevorzugten Ausgestaltung des Erfindungsgedankens ist das Tragteil auf das Halterungsteil aufsteckbar.

Im Rahmen der Erfindung liegt es ferner, wenn das Tragteil mit dem Halterungsteil lösbar verklemmbar und/oder verrastbar ist.

Eine besonders einfache Ausgestaltung der Erfindung sieht vor, daß das Halterungsteil mindestens einen Dorn, eine Lasche od. dgl. Aufsteckmittel, und das Tragteil mindestens ein zugehöriges Loch, einen Schlitz od. dgl. Gegenaufsteckmittel aufweist, wodurch das Tragteil auf das Halterungsteil leicht aufgesteckt und wieder abgezogen werden kann.

Um eine sichere Verbindung zwischen dem Halterungsteil und dem Tragteil zu gewährleisten und Klappergeräusche zu verhindern, sieht eine weitere vorteilhafte Ausgestaltung der Erfindung vor, daß sich das Loch konisch mit der Tiefe verjüngt, während der Dorn im wesentlichen über seine Länge gleichen Querschnitt hat. Umgekehrt können auch die Dorne konisch und die Löcher im wesentlichen über ihre gesamte Länge kreiszylindrisch mit gleichem Querschnitt ausgebildet sein.

Eine noch sicherere und verwindungssteife Verbindung ergibt sich, wenn das Halterungsteil zwei Dorne aufweist und die beiden zugehörigen Löcher des Tragteils in Richtung ihrer Tiefe gesehen leicht geneigt zueinander verlaufen.

Gemäß einem weiteren Erfindungsmerkmal weist das Halterungsteil einen im wesentlichen plattenförmigen Basisabschnitt mit einem Loch für die Aufnahme der Radachse auf, wodurch sich in vorteilhafter Weise eine großflächige Abstützung des Halterungsteils am Rahmen ergibt.

Eine ungehinderte Montage ergibt sich dadurch, daß bei einer weiteren Ausgestaltung der Erfindung das Basisteil als Abstandshalter für das Tragteil von der Gabel ausgebildet ist oder einen solchen trägt. Dabei kann der Abstandshalter von einer Ausformung des Basisteils gebildet sein.

Eine weitere vorteilhafte Ausführungsform sieht vor, daß das Halterungsteil zwischen dem Arretierungsteil und dem Fahrradrahmen angeordnet ist, wodurch sich eine besonders stabile Befestigung ergibt.

Eine bevorzugte Ausgestaltung der Erfindung sieht mindestens eine Stoßdämpfungseinrichtung zwischen dem Halterungsteil und dem Tragteil vor, wodurch Erschütterungen des Gepäcks, Stoßbelastungen der Radachse sowie eine Beeinträchtigung der Fahreigenschaften weitgehend vermieden werden.

Dieser Effekt läßt sich besonders einfach dadurch erreichen, daß in dem Loch des Tragteiles für die Aufnahme des Dornes des Halterungsteils ein Pfropfen aus einem elastischen Material wie z.B. Gummi, angeordnet ist. Es ist aber auch möglich, an anderer Stelle zwischen Halterungsteil und Tragteil einen Streifen aus elastischem Material, wie Gummi, vorzusehen, z.B. in einer Nut an der Unterkante des Tragteils.

Um eine sichere Verbindung von Gepäckstück und dem Tragteil zu erreichen, sieht eine weitere Ausführungsform der Erfindung am Tragteil mehrere Bohrungen zum Verbinden mit dem Gepäckstück mittels Schrauben oder Nieten o.dgl. vor.

Das Tragteil kann auch wie in einer weiteren Ausgestaltung der Erfindung als integrierter Bestandteil des Gepäckstückes ausgebildet sein, wodurch sich eine besondere Befestigung des Tragteils an dem Gepäckstück erübrigt.

Insbesondere wenn das Tragteil, wie bei einer bevorzugten Ausführungsform der Erfindung, in der Mitte oder oberhalb der Mitte des Gepäckstückes angeordnet ist, liegt der Schwerpunkt des Gepäckstücks unterhalb der Achse, was zu einem besonders guten Fahrverhalten des Zweirades führt.

Bei einer weiteren bevorzugten Ausgestaltung der Erfindung bestehen das Halterungsteil und oder das Tragteil aus Kunststoff oder Metall, was sowohl eine einfache Herstellung ermöglicht als auch bei Kunststoff zu einem geringen Gewicht der Gesamtvorrichtung führt.

Gemäß einer weiteren bevorzugten Ausführungsform der Erfindung besteht das Arretierungsteil aus Metall, was zu einer langen Haltbarkeit, insbesondere der Zahnkranzfräsungen oder deren anderen Arretierungsmittel positiv beiträgt, auch wenn erhebliche Kräfte aufgenommen werden müssen. Es kann aber auch aus Kunststoff oder aus einer Metall Kunststoff-Kombination bestehen.

Weitere Ziele, Merkmale, Vorteile und Anwendungsmöglichkeiten der vorliegenden Erfindung ergeben sich aus den nachfolgenden Beschreibungen von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

Es zeigen:

Fig. 1 eine perspektivische Ansicht des Halterungsteils und des Tragteils nach einem Ausführungsbeispiel der Erfindung jeweils schräg von unten,

Fig. 2 eine Ansicht des Halterungsteils von Fig. 1 von der dem Rad zugewandten Seite aus,

Fig. 2A einen horizontalen Schnitt durch das Halterungsteil entlang der Linie A-A gemäß Fig. 2,

Fig. 2B eine Seitenansicht des auf der rechten Seite der Fahrzeugachse anzuordnenden Halterungsteils von Fig. 1 in Fahrtrichtung B von Fig. 2 gesehen,

Fig. 2C einen horizontalen Schnitt analog zu Fig. 2A einer besonderen Ausführungsform des Halterungsteils mit dem Arretierungsteil nach der Erfindung,

Fig. 3 eine Ansicht eines Arretierungsteils nach der Erfindung von der dem Rad zugewandten Seite aus,

Fig. 3A eine Seitenansicht des Arretierungsteils aus Richtung A gemäß Fig. 3,

Fig. 3B einen horizontalen Schnitt durch das Arretierungsteil entlang der Linie B-B gemäß Fig. 3,

Fig. 3C eine Ansicht des Arretierungsteils von der dem Halterungsteil zugewandten Seite (Rückseite von Fig. 3),

Fig. 4 eine Ansicht des mit einem Gepäckstück zu verbindenden Tragteils aus der dem Gepäckstück abgewandten Seite,

Fig. 4A eine Ansicht des Tragteils aus Richtung A gemäß Fig. 4,

Fig. 5 eine Ansicht des Tragteils gemäß Fig. 4 von der dem Gepäckstück zugewandten Seite aus,

Fig. 5A einen horizontalen Schnitt durch das Tragteil entlang der Linie A-A gemäß Fig. 5,

Fig. 6 eine Ansicht des Tragteils in einer anderen Ausgestaltung der Erfindung,

Fig. 7 eine Ansicht des Halterungsteils in einer anderen Ausgestaltungsform passend zu dem Tragteil nach Fig. 6,

Fig. 7A eine Teilansicht eines Dornes gemäß einer weiteren Ausführungsform des Halteteils,

Fig. 8 ein vertikaler Schnitt durch die Mittelachse eines der Kanäle gemäß Fig. 6,

Fig 9 ein vertikaler Schnitt längs der Radachse durch eine montierte Gepäcktragevorrichtung nach einer Ausgestaltung der Erfindung.

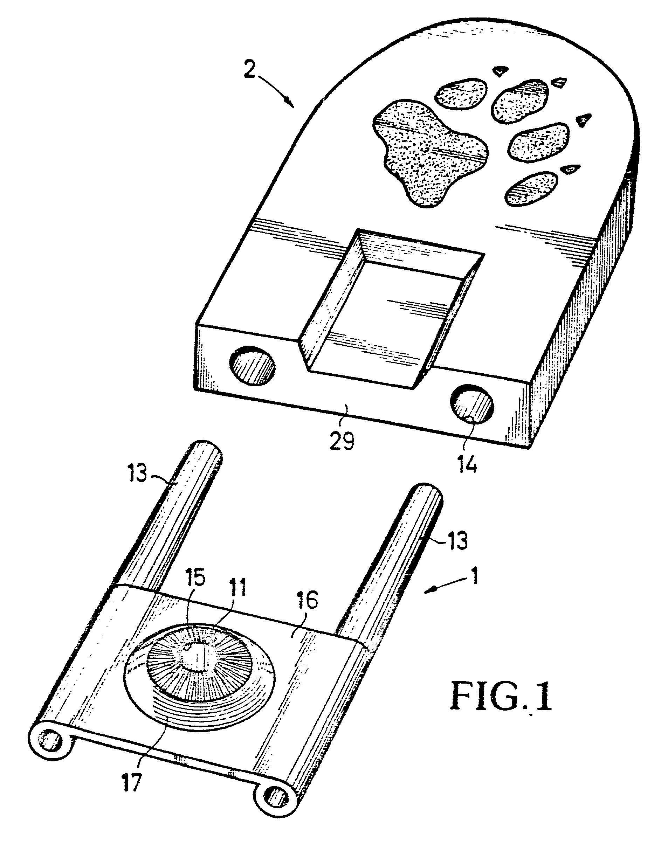

Wie aus Fig. 1 ersichtlich, weist die Gepäcktragevorrichtung im wesentlichen zwei Elemente, ein Halterungsteil 1 und ein plattenförmiges Tragteil 2 auf.

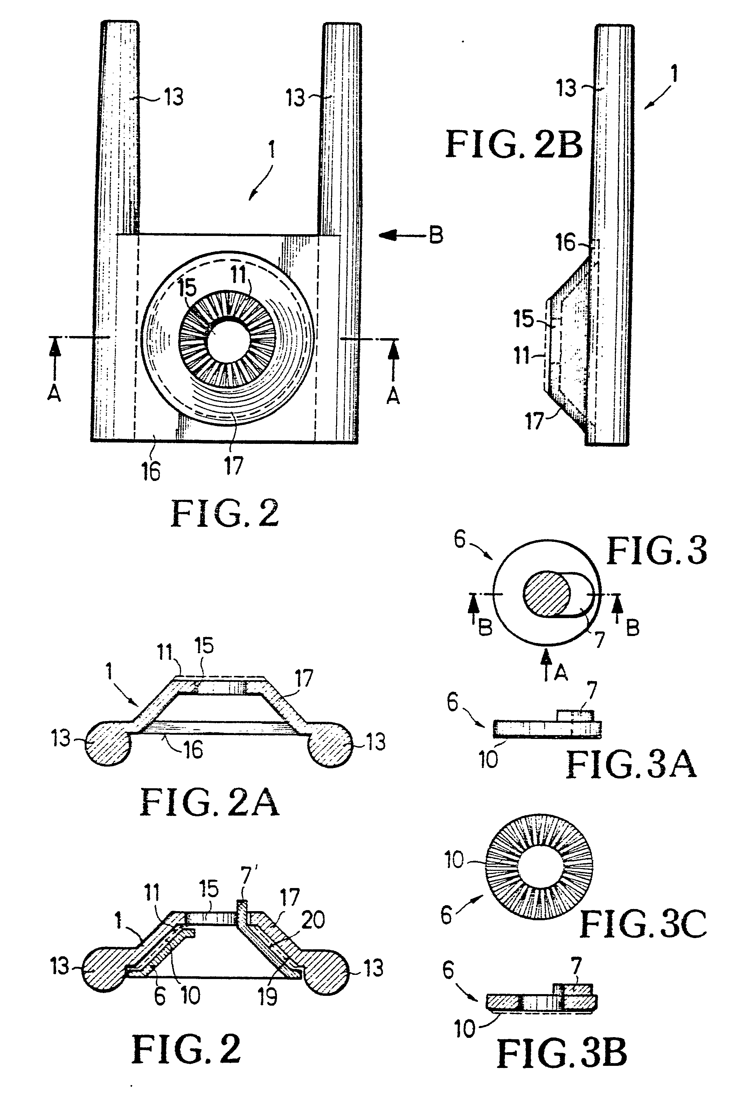

Das Halterungsteil 1, wie auch in Fig. 2, 2A und 2B dargestellt, hat einen plattenförmigen Basisabschnitt 16 mit einer zum Rad hin zu richtenden Ausformung 17, die eine ebenfalls zum Rad hin zu richtende Zahnkranzfräsung 11 und ein zentrales Loch 15 aufweist, und mit zwei in Montagestellung nach oben ragenden etwa zylindrischen Dornen 13, welche in zwei in entsprechendem Abstand in dem Halteteil 2 vorgesehene Kanäle 14 passen.

Gemäß Fig. 2C kann die Verzahnung 10, 11 auch auf der dem Rad abgewandten Seite auf der Innenfläche 19 der Ausformung 17 und auf der Außenfläche 20 des in diesem Fall konisch ausgebildeten Arretierungsteils 6 angebracht sein. Zur Festlegung der Winkellage greift mit dem Ansatz 7' durch das Loch 15 des Basisabschnitts 16 bis in den Rahmenschlitz 8 der Gabel 9 hindurch.

Ein in Fig. 3, 3A, 3B und 3C dargestelltes ringförmiges Arretierungsteil 6 hat auf der dem Rad zuzuwendenden Seite einen Ansatz 7 und auf der dem Rad abzuwendenden und dem Halterungsteil 1 zuzuwendenden Seite eine Zahnkranzfräsung 10, welche zu der Zahnkranzfräsung 11 des Tragteils 1 paßt.

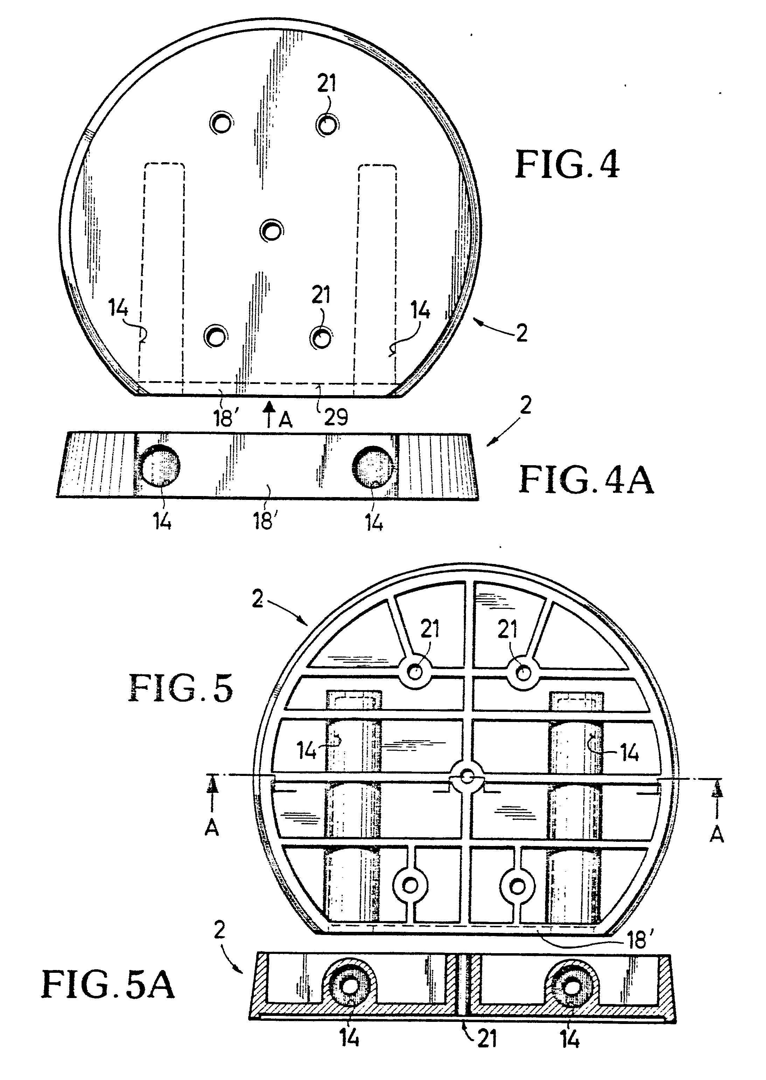

Das Tragteil 2. das als Kunststoffteil ausgebildet und in Fig. 4, 4A, 5 und 5A abgebildet ist, weist eine mehr oder weniger kreisförmige oder abgerundete Grundplatte auf, die mit zwei vertikal verlaufenden Kanälen 14 für die Aufnahme von Dornen 13 und mehreren horizontal verlaufenden Bohrungen 21 für die Aufnahme von Befestigungsstiften od. dgl. zur Verbindung mit dem Gepäckstück versehen ist.

In einer Nut der Unterkante 29 des Tragteils 2 befindet sich zur Stoßdämpfung ein Streifen 18' aus elastischem Material.

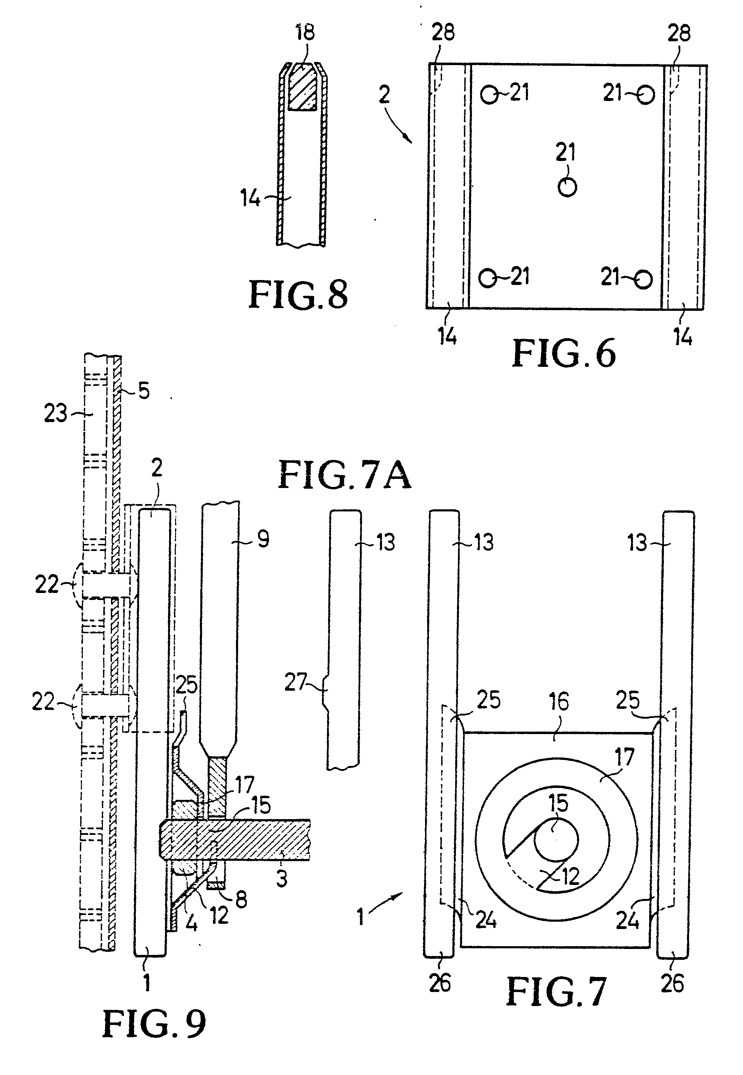

Das Tragteil 2 kann auch eine im wesentlichen rechteckige Grundform aufweisen, und in den Kanälen 14 mit Verformungsabschnitten 28 versehen sein, wie aus Fig. 6 hervorgeht.

Fig. 7 und 7 A zeigen eine besondere Ausführungsform des Halterungsteils 1, welche an dem Basisteil 16 im Bereich einer Ausformung 17 einen axialen Vorsprung 12 zur Festlegung der Winkellage an der Fahrradgabel 9. Verformungsbereiche 24 mit Endabschnitten 25 und 26 sowie an den Dornen 13 Vorsprünge 27 aufweist, um eine gute Steck-Rast-Verbindung mit dem Tragteil 2 von Fig. 6 zu bilden.

Innerhalb der Kanäle 14 können in deren oberen Abschnitt Pfropfen 18 zur Stoßdämpfung gegen die Dorne 13 angeordnet sein, wie Fig. 8 zeigt.

Fig. 9 zeigt die Gepäcktragevorrichtung in montiertem Zustand, wobei das Halterungsteil 1 durch eine Radmutter 4 auf der Radachse 3 in durch den Vorsprung 12 und den Rahmenschlitz 18 der Gabel 9 vorbestimmter Winkellage befestigt ist. Das Tragteil 2 ist mit dem Gepäckstück 5 vermittels einer der Versteifung des Gepäckstückes 5 dienenden Stützplatte 23 mit Hilfe von Schrauben, Nieten 22 o.dgl. befestigt. Der als Ausprägung gestattete Vorsprung 12 des Halterungsteils 1 greift in den Rahmenschlitz 8 der Gabel 9 des Zweiradfahrzeugs, um ein Verdrehen zu verhindern. Ein gesondertes Arretierungsteil 6 ist hierbei entbehrlich. Dafür kann das Halterungsteil 1 nur in einer vorgegebenen Position auf der Radachse 3 festgelegt werden.

Bezugszeichenliste:

1 Halterungsteil
2 Tragteil
3 Radachse
4 Radmutter
5 Gepäckstück
6 Arretierungsteil
7, 7' Ansatz
8 Rahmenschlitz
9 Gabel
10 Zahnkranzfräsung
11 Zahnkranzfräsung
12 Vorsprung
13 Dorn
14 Kanäle
15 Loch
16 Basisabschnitt
17 Ausformung
18 Stoßdämpfereinrichtung (Stopfen, Streifen)
18' Stoßdämpfereinrichtung (Stopfen, Streifen)
19 Innenfläche
20 Außenfläche
21 Bohrungen
22 Schrauben, Nieten o.dgl.
23 Stützplatte
24 Verformungsbereiche
25 Endabschnitte
26 Endabschnitte
27 Vorsprung
28 Verformungsabschnitte
29 Unterkante

Ansprüche

1. Gepäcktragevorrichtung für Zweiradfahrzeuge wie Fahrräder, gekennzeichnet durch ein auf der Radachse (3) befestigbaren Halterungsteil (1) und ein mit dem Gepäckstücke (5) verbindbaren oder verbundenen Tragteil (2), wobei das Tragteil (2) mit dem Halterungsteil (1) lösbar verbindbar ist.

2. Gepäcktragevorrichtung nach Anspruch 1, dadurch gekennzeichnet, daß das Halterungsteil (1) mit Hilfe einer Radmutter od. dgl. Klemmvorrichtung z.B. Schnellspannvorrich tung (4) verdrehsicher auf der Radachse (3) montierbar ist.

3. Gepäcktragevorrichtung nach Anspruch 1 oder 2, dadurch gekennzeichnet, daß das Halterungsteil (1) zur Verdrehsicherung mit einem Vorsprung (12) in einen Rahmenschlitz (8) der Gabel (9) des Zweiradfahrzeugs einführbar ist.

4. Gepäcktragevorrichtung nach Anspruch 1 oder 2, dadurch gekennzeichnet, daß das Halterungsteil (1) mit einem auf der Radachse (3) verdrehsicher montierbaren Arretierungsteil (6) in vorgebbarer Winkellage verbindbar ist.

5. Gepäcktragevorrichtung nach Anspruch 4, dadurch gekennzeichnet, daß der Arrtierungsteil (6) zur Verdrehsicherung mit einem Ansatz (7) in einen Rahmenschlitz (8) der Gabel (9) des Zweiradfahrzeugs einführbar ist.

6. Gepäcktragevorrichtung nach Anspruch 4 oder 5, dadurch gekennzeichnet, daß das Halterungsteil (1) in unterschiedlichen Winkellagen formschlüssig in den Arretierungsteil (6) eingreifend auf der Radachse (3) montierbar ist.

7. Gepäcktragevorrichtung nach einem der Ansprüche 4 bis 6, dadurch gekennzeichnet, daß das Arretierungsteil (6) ringförmig ausgebildet und auf die Radachse (4) aufsteckbar ist.

8. Gepäcktragevorrichtung nach einem der Ansprüche 4 bis 7, dadurch gekennzeichnet, daß das Arretierungsteil (6) auf der dem Halterungsteil (1) zugewandten Seite eine Zahnkranzfräsung (10) od. dgl. Arretierungsmitteln, wie Noppen, Dornen und ähnlichen aufweist, die - nach Montage - in eine entsprechende Gegenzahnkranzfräsung (11) od. dgl. Gegenarretierungsmittel, wie Vertiefungen, Aussparungen und ähnliche, des Halterungsteil (1) zur Verdrehsicherung eingreift.

9. Gepäcktragevorrichtung nach einem der Ansprüche 1 bis 8, dadurch gekennzeichnet, daß das Tragteil (2) auf das Halte rungsteil (1) aufsteckbar ist.

10. Gepäcktragevorrichtung nach einem der Ansprüche 1 bis 9, dadurch gekennzeichnet, daß das Tragteil (2) mit dem Halterungsteil (1) lösbar verklemmbar und oder verrastbar ist.

11. Gepäcktragevorrichtung nach einem der Ansprüche 1 bis 10, dadurch gekennzeichnet, daß das Halterungsteil (1) mindestens einen Dorn (13). eine Lasche od. dgl. Aufsteckmittel, und das Tragteil (2) ein zugehöriges Loch (14) einen Schlitz od. dgl. Gegenaufsteckmittel zum Aufstecken des Tragteils (2) auf das Halterungsteil (1) aufweisen.

12. Gepäcktragevorrichtung nach Anspruch 11, dadurch gekennzeichnet, daß sich das Loch (14) zur Erzeugung eines Klemmsitzes des Dornes (13) konisch mit der Tiefe verjüngt und der Dorn (13) im wesentlichen über seine Länge gleichen Querschnitt hat.

13. Gepäcktragevorrichtung nach Anspruch 11 oder 12, dadurch gekennzeichnet, daß das Halterungsteil (1) zwei im wesentlichen parallele Dorne (13) aufweist. und die beiden zugehörigen Löcher (14) des Tragteils (2) in Richtung ihrer Tiefe gesehen leicht zueinander geneigt verlaufen.

14. Gepäcktragevorrichtung nach einem der Ansprüche 1 bis 13, dadurch gekennzeichnet, daß das Halterungsteil (1) einen im wesentlichen plattenförmigen Basisabschnitt (16) mit einem Loch (15) für die Aufnahme der Radachse (3) aufweist.

15. Gepäcktragevorrichtung nach Anspruch 14, dadurch gekennzeichnet, daß der Basisabschnitt (16) des Halterungsteils (1) als Abstandshalter für das Tragteil (2) von der Gabel (9) ausgebildet ist oder einen solchen trägt.

16. Gepäcktragevorrichtung nach Anspruch 15, dadurch gekennzeichnet, daß der Abstandshalter von einer Ausformung (17) des Basisteils (16) gebildet ist.

17. Gepäcktragevorrichtung nach Anspruch 16, dadurch gekennzeichnet, daß die Ausformung (17) auf ihrer konischen Innenfläche (19) die Zahnkranzfräsung (10) trägt und das Arretierungsteil (6) eine entsprechende konische Außenfläche (20) mit der Gegenzahnkranzfräsung (11) aufweist sowie mit dem ggf. vorgesehenen Ansatz (7) durch das Halterungsteil (1) hindurchragt.

18. Gepäcktragevorrichtung nach einem der Ansprüche 1 bis 17, dadurch gekennzeichnet, daß die Verbindung zwischen Halterungsteil (1) und Tragteil (2) mindestens eine Stoßdämpfungseinrichtung aufweist.

19. Gepäcktragevorrichtung nach Anspruch 18, dadurch gekennzeichnet, daß die Stoßdämpfungseinrichtung ein Pfropfen (18) aus elastischem Material. wie Gummi, ist, welcher in dem mindestens einen Loch (14) für die Aufnahme des mindestens einen Dorns (13) angeordnet ist. oder ein Streifen (18') aus elastischem Material Gummi ist, welcher in einer Nut an der Unterkante (29) des Tragteils (2) angeordnet ist.

20. Gepäcktragevorrichtung nach einem der Ansprüche 1 bis 19, dadurch gekennzeichnet, daß das Tragteil (2) mehrere Bohrungen (21) zum Verbinden mit dem Gepäckstück (5) bzw. einer in oder an diesem angeordneten Stützplatte (23) mittels Schrauben, Nieten o.dgl. (22) aufweist.

21. Gepäcktragevorrichtung nach einem der Ansprüche 1 bis 20, dadurch gekennzeichnet, daß das Tragteil (2) integrierter Bestandteil des Gepäckstücks (5) ist.

22. Gepäcktragevorrichtung nach einem der Ansprüche 1 bis 21, dadurch gekennzeichnet, daß das Tragteil (2) oberhalb der Mitte des Gepäckstücks (5) an diesem vorgesehen ist.

23. Gepäcktragevorrichtung nach einem der Ansprüche 1 bis 22, dadurch gekennzeichnet, daß das Halterungsteil (1) und/oder das Tragteil (2) aus Kunststoff oder Metall bestehen bzw. besteht.

24. Gepäcktragevorrichtung nach einem der Ansprüche 1 bis 23, dadurch gekennzeichnet, daß das Arretierungsteil (6) aus Kunststoff oder Metall besteht.

25. Gepäcktragevorrichtung nach einem der Ansprüche 1 bis 24, dadurch gekennzeichnet, daß das Arretierungsteil (6) mit dem Halterungsteil (1) in vorbestimmter Winkellage unlösbar verbindbar, z.B. verklebbar ist.

FIG.1

FIG. 2

FIG. 2B

FIG. 2A

FIG. 2

FIG. 3

FIG. 3A

FIG. 3C

FIG. 3B

FIG.4

FIG.4A

FIG.5

FIG.5A

FIG.8

FIG.6

FIG.7A

FIG.9

FIG.7